(19) Europäisches Patentamt

European Patent Office

Office européen des brevets

(11) Veröffentlichungsnummer: **0 505 907 B1**

(12) **EUROPÄISCHE PATENTSCHRIFT**

(45) Veröffentlichungstag der Patentschrift: **05.10.94**

(21) Anmeldenummer: **92104655.3**

(22) Anmeldetag: **18.03.92**

(51) Int. Cl.⁵: **A01F 29/10**, A01G 3/00

(54) **Mobile Zerkleinerungsvorrichtung für organische Abfallmaterialien.**

(30) Priorität: **25.03.91 DE 4109726**

(43) Veröffentlichungstag der Anmeldung:
**30.09.92 Patentblatt 92/40**

(45) Bekanntmachung des Hinweises auf die
Patenterteilung:
**05.10.94 Patentblatt 94/40**

(84) Benannte Vertragsstaaten:
**AT CH DE FR GB IT LI NL SE**

(56) Entgegenhaltungen:
**EP-A- 0 176 057
AT-A- 349 815
DE-A- 2 554 661
DE-B- 1 233 328**

(73) Patentinhaber: **J. WILLIBALD GMBH Maschinenfabrik
Bahnhofstrasse 6
D-88639 Wald (DE)**

(72) Erfinder: **Willibald, Josef
Frickinger Strasse 97
W-7771 Frickingen 2 / Altheim (DE)**

(74) Vertreter: **Seemann, Norbert W., Dipl.-Ing.
Brehmstrasse 37
D-73033 Göppingen (DE)**

**Beschreibung**

Die Erfindung bezieht sich auf eine Vorrichtung nach dem Oberbegriff des Patentanspruchs 1. Sie geht dabei aus von einem System nach der EP-PS 0 176 057, welche bereits eine vergleichbare Vorrichtung zeigt.

In ihrem Grundaufbau besteht diese bekannte Ausführung dabei aus einem Laderaum mit mechanisch angetriebenem Kratzboden, darüber liegendem Dosierwalzenpaar und diesem nachgeordneten, eigentlichen Zerkleinerungsaggregat an einem der Laderaumenden, wobei im speziellen vorgesehen ist, daß als Zerkleinerungsaggregat ein Schlegelmulchgerät mit rotierender Arbeitswelle und freipendelnden Arbeitsschlegeln dient.

Der Antrieb sämtlicher Grundaggregate erfolgt dabei separat, ist jedoch von ein- und demselben Hauptantrieb abgeleitet.

Vervollständigt und damit ortsbeweglich wird die bekannte Vorrichtung letztlich noch durch Zuordnung eines Fahrwerks sowie eines eigenen Ladegreifers an der Ladepritsche bzw. dem Grundrahmen sowie dadurch, daß das Dosierwalzenpaar in Arbeitsrichtung des Kratzbodens gesehen hintereinander und oberhalb des letzteren auf einer Schwinge als Einheit höhenbeweglich gelagert ist, wobei sich der Drehpunkt dieser Schwinge oberhalb des Kratzbodens und der Schlegelumlaufbahn befindet sowie die dem eigentlichen Zerkleinerungsaggregat benachbarte Einzugswalze einen kleineren Durchmesser als die am freien Ende der Schwinge liegende Dosierwalze hat.

Diese bekannte mobile Zerkleinerungseinrichtung des gleichen Anmelders hat sich bereits seit längerem in der Praxis hervorragend bewährt, und zwar vor allem dabei für die Zerkleinerung von Friedhofsabfällen, Schnitt- und Astholz bzw. Reisig aus der Obst- bzw. Forstwirtschaft für die anschließende Kompostierung oder in ähnlichen Einsatzgebieten des privaten bzw. kommunalen Bereichs.

Da jedoch speziell auf dem zuletzt genannten Arbeits- bzw. Einsatzgebiet immer wieder Betriebsstörungen durch Verklemmungen oder Verstopfungen auftreten können, wenn beispielsweise größere Wurzelstökke, Baumstümpfe oder Stammteile von gefällten Bäumen der unterschiedlichsten Art in den Bereich der die Dosier- bzw. Zuführwalze tragende Schwinge gelangen, ist die Aufgabe der vorliegenden Erfindung vor allem darin zu sehen, hier durch geeignete zusätzliche Mittel und Maßnahmen Abhilfe zu schaffen, um die anmeldegemäße Vorrichtung dadurch noch universeller einsetzbar zu gestalten.

Gelöst wird diese Aufgabe dabei generell durch die kennzeichnenden Merkmale des Patentanspruchs 1; die Unteransprüche beinhalten hierzu notwendige Ausgestaltungsdetails und vorteilhafte Weiterbildungen des neuen Lösungsvorschlags, der zudem zeichnerisch dargestellt und im folgenden noch näher beschrieben ist.

Die Zeichnungen zeigen in weitestgehend schematischer Darstellung in

Fig. 1 die Seitenansicht des vorderen Teils der neuen Vorrichtung,

Fig. 2 eine Draufsicht zu Fig. 1 und

Fig. 3 den Bereich der Zerkleinerungsaggregate aus Fig. 1 vergrößert im Schnitt.

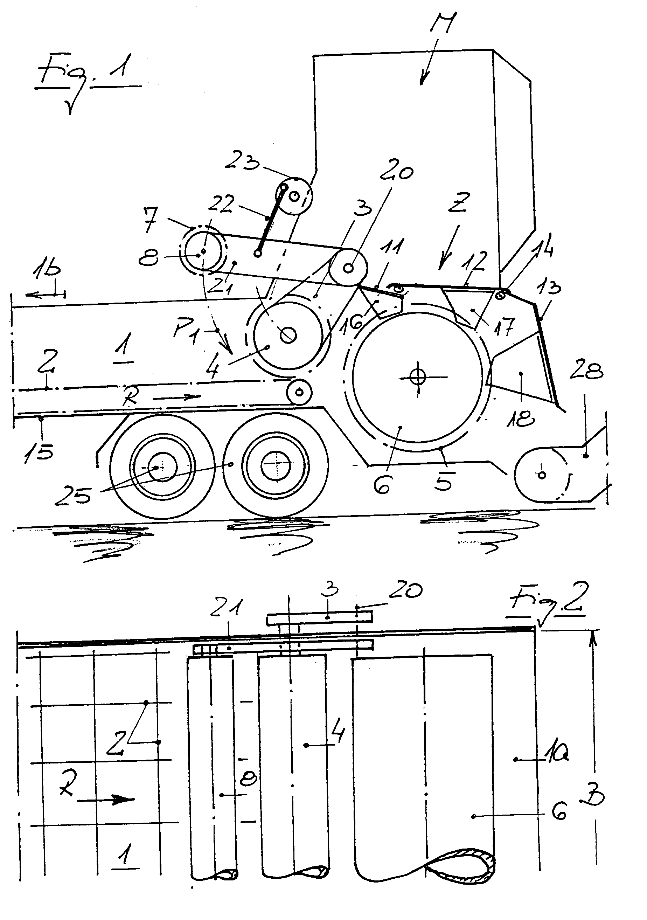

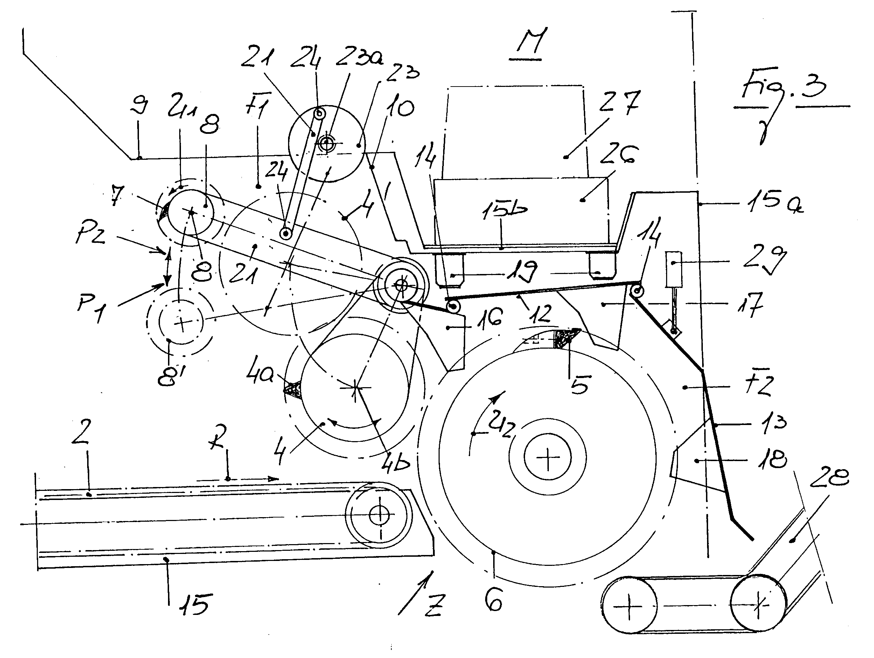

Die dargestellte, mobile Zerkleinerungsvorrichtung besteht aus einem mit Laufrädern 25 versehenen Gestell 15 mit offenem Laderaum 1 und bodenseitig darin befindlichem, mechanisch angetriebenem Kratzboden 2, einer oberhalb des letzteren liegenden, über eine Schwinge 3 höhenbeweglich gelagerten Dosier- bzw. Einzugswalze 4 und einem dieser wiederum in Arbeitsrichtung R nachgeordneten Zerkleinerungsaggregat als Anbaueinheit Z am abgabeseitigen Laderaumende 1a, wobei das eigentliche Zerkleinerungsaggregat in an sich bekannter Weise als sogenanntes Schlegelmulchgerät mit rotierender Arbeitswelle 6 und starren Arbeitsschlegeln 5 ausgebildet ist.

Neu bei einer solchen Vorrichtung ist nun, daß der frei höhenbeweglichen Einzugswalze 4 in Arbeitsrichtung R gesehen ein walzenförmiger, angetriebener Fräsrotor 7, 8 als Vorzerkleinerer für das über den Kratzboden 2 zugeführte Material vorgeschaltet ist, und sämtliche rotierenden Aggregate 4, 6, 8 durch eine zusammenhängende, teils gelenkige Haube 9 bis 13 unter Bildung eines ineinander übergehenden Förderkanals $F_1$ und $F_2$ nach oben hin abgeschirmt sind.

Das ganz besondere und zugleich wesentlichste Merkmal dieses Rotors 8 mit seinen vorzugsweise starren Schlegelwerkzeugen 7 ist aber darin zu sehen, daß der Rotor 8 des Vorzerkleinerers sich über die gesamte Breite B des Laderaumes 1 erstreckt und an beiden Enden in Schwingarmen 21 gelagert ist, die jeweils über einen Kurbelarm 22 mit einem stufenlos regelbaren Exzenterantrieb 23 auf- und abbeweglich verbunden sind und den Rotor 8 vor der Umlaufbahn 4' der Einzugswalze 4 entlangführen, wobei vorteilhafterweise noch vorgesehen sein kann, daß Kurbelarme 22 und deren Anlenkpunkte 24 am Antriebsrad 23 und Schwingarmen 21 derart dimensioniert bzw. positioniert sind, daß die auf den Kratzboden 2 hin abwärts gerichtete Fräsbewegung $P_1$ langsam und der Hochlauf $P_2$ des Rotors 8 bzw. der Schwingarme 21 schnell verläuft; hierdurch wird ein besonders gutes Arbeitsergebnis erzielt.

In spezieller baulicher Ausgestaltung dieser Erfindung ist noch vorgesehen, daß die Schwingarme 21 für den Vorzerkleinerungsrotor 8 an den Innenseiten des Laderaumes 1 entlangverlaufen und die Schwingen 3 der Einzugswalze 4 an den Außenseiten des Laderaumes 1 angeordnet sind und beide Schwingen 21 und 3 auf ein und derselben durchgehenden Schwenkachse 20 gelagert sind.

Hierbei sind für den freien Durchtritt der Drehachse 4b der ungesteuert und je nach Materialanfall mehr oder weniger weit sich aufwärts bewegenden Einzugswalze 4, entlang deren Bewegungsbahn, in nicht in den Zeichnungen dargestellter Weise entsprechende Schlitzführungen in den Seitenwandungen des Laderaumes 1 vorgesehen.

In ähnlichen, jedoch kleineren Schlitzführungen o.dgl. sind in den Seitenwandungen des Förderkanalbereichs $F_2$ auch die Achsen der Gelenke 14 der beweglichen Kanalwandungsteile 11, 12, 13 gelagert, wobei Anschlagpuffer 19 oberhalb der Gelenke 14 der beweglichen Kanalwand 11 und 12 am Gestell 15 im Bereich der Motorgrundplatte 15b zur Begrenzung der Beweglichkeit nach oben dienen. In geringen, jedoch ausreichendem Umfang kann sich somit der Querschnitt des Förderkanals $F_2$ eventuell eingezogenen Grobteilen anpassen und so u. a. die Gegenschneiden 16, 17, 18 an den Innenseiten des Förderkanals $F_2$ vor Beschädigung oder Zerstörung schützen.

Der freie Endteil 13 der gelenkigen Kanalwand kann im übrigen auch durch einen Gasdruck-Stellzylinder 29 o. ä. in seinem Abstand zum Hauptzerkleinerungsrotor 5, 6 ebenso voreinstellbar sein, wie auch der Exenterantrieb 22, 23 des Vorzerkleinerer eine individuelle Anpassung an unterschiedliche Betriebsverhältnisse bis hin zur völligen Stillsetzung bzw. Abschaltung der Bewegung $P_1$ und $P_2$ der Schwingen 21.

Vervollständigt wird die gesamte Vorrichtung letztlich noch dadurch, daß sämtliche Aggregate von einem Hydromotor 27 aus angetrieben werden und der Drehsinn $U_1$ und $U_2$ von Vorzerkleiner 7, 8 und Hauptzerkleinerungsrotor 5, 6 entgegengesetzt zueinander verläuft; hierbei sind die einzelnen Umlaufgeschwindigkeiten selbstverständlich individuell unterschiedlich regelbar.

Zum Austrag bzw. der Weiterleitung des den Förderkanal $F_2$ verlassenden, zerkleinerten Materials kann in an sich bekannter Weise z. B. ein abgewinkelter Kratzboden 28 oder ein ähnliches aufwärtsführendes Förderorgan dienen, das dabei vor allem zum Aufschichten von Kompostmieten geeignet ist.

Bezugsziffernverzeichnis
_____

| | |
|---|---|
| 1 | Laderaum |
| 1a | abgabeseitiges Ende |
| 1b | aufgabeseitiges Ende mit Zug- oder Anhängedeichsel |
| 2 | Kratzboden |
| 3 | Schwinge |
| 4 | Dosier- und Einzugswalze |
| 4' | oberste Stellung |
| 4a | Zinken |
| 4b | Drehachse |
| 5 | starre Mulchschlegel |
| 6 | rotierende Arbeitswelle |
| 7 | Schlegel des Vorzerkleinerers |
| 8 | Rotor des Vorzerkleinerers |
| 8' | unterste Stellung |
| 9 | starre Kanalwand |
| 10 | "          " |
| 11 | gelenkige Kanalwand |
| 12 | "          " |
| 13 | "          " |
| 14 | Gelenk |
| 15 | Gestell bzw. Grundrahmen |
| 15a | vordere Begrenzung des Gestells |
| 15b | Motorgrundplatte |

| 16 | Gegenschneide |
|---|---|
| 17 | " |
| 18 | " |
| 19 | Anschlagpuffer |
| 20 | Schwenkachse für Einzugswalze ( 4 ) und Schwinge ( 21 ) des Vorzerkleinerungsrotors ( 8 ) |
| 21 | Schwingarm |
| 22 | Kurbelarm |
| 23 | Antriebsrad |
| 23a | Umlaufachse |
| 24 | Anlenkpunkt von Pos. 22 an Pos. 21 und Pos. 23 |
| 25 | Laufrad |
| 26 | Ölwanne |
| 27 | Hydromotor |
| 28 | abgewinkelter Austragförderer |
| 29 | Stellzylinder |

| B | Laderaumbreite |
|---|---|
| $F_1$ | Förderkanal |
| $F_2$ | " |
| M | Antriebseinheit |
| $P_1$ | Fräsbewegung ( abwärts ) |
| $P_2$ | Hochlauf |
| $U_1$ | Umlaufrichtung Vorzerkleinerer |
| $U_2$ | " Hauptrotor |
| Z | Anbauheit für Zerkleinerung |

**Patentansprüche**

1. Mobile Zerkleinerungsvorrichtung für organische Abfallmaterialien, bestehend aus einem Laderaum ( 1 ) mit mechanisch angetriebenem Kratzboden ( 2 ), einer oberhalb des letzteren liegenden, über eine Schwinge ( 3 ) höhenbeweglich gelagerten Dosier- bzw. Einzugswalze ( 4 ) und einem dieser wiederum in Arbeitsrichtung ( R ) nachgeordneten Zerkleinerungsaggregat am abgabeseitigen Laderaumende ( 1a ), wobei dieses Aggregat in an sich bekannter Weise als Schlegelmulchgerät mit rotierender Arbeitswelle ( 6 ) und starren Arbeitsschlegeln ( 5 ) ausgebildet ist,

**dadurch gekennzeichnet,**

daß der höhenbeweglichen Einzugswalze ( 4 ) in Arbeitsrichtung ( R ) gesehen ein walzenförmiger, angetriebener Fräsrotor ( 8 ) mit starren Schlegelwerkzeugen ( 7 ) als Vorzerkleinerer für das über den Kratzboden ( 2 ) zugeführte Material vorgeschaltet ist, und sämtliche rotierenden Aggregate ( 4, 6, 8 ) durch eine zusammenhängende, teils gelenkige Haube ( 9 bis 13 ) unter Bildung eines ineinander übergehenden Förderkanals ( $F_1$ und $F_2$ ) nach oben hin abgeschirmt sind, so daß der Querschnitt des Förderkanals sich an eingerogenen Grobteilen anpassen kann.

2. Vorrichtung nach Anspruch 1,
**dadurch gekennzeichnet,**
daß der Rotor ( 8 ) des Vorzerkleinerers sich über die gesamte Breite ( B ) des Laderaumes ( 1 ) erstreckt und an beiden Enden in Schwingarmen ( 21 ) gelagert ist, die jeweils über einen Kurbelarm ( 22 ) mit einem stufenlos regelbaren Exzenterantrieb ( 23 ) auf- und abbeweglich verbunden sind und den Rotor ( 8 ) vor der Umlaufbahn ( 4' ) der Einzugswalze ( 4 ) entlangführen.

3. Vorrichtung nach den Ansprüchen 1 und 2,
**dadurch gekennzeichnet,**
daß Kurbelarme ( 22 ) und deren Anlenkpunkte ( 24 ) am Antriebsrad ( 23 ) und Schwingarmen ( 21 ) derart dimensioniert bzw. positioniert sind, daß die auf den Kratzboden ( 2 ) hin abwärts gerichtete Fräsbewegung ( $P_1$ ) langsam und der Hochlauf ( $P_2$ ) des Rotors ( 8 ) bzw. der Schwingarme ( 21 ) schnell verläuft.

4. Vorrichtung nach den Ansprüchen 1 bis 3,
**dadurch gekennzeichnet,**
daß die Schwingarme ( 21 ) für den Vorzerkleinerungsrotor ( 8 ) an den Innenseiten des Laderaumes ( 1 ) entlangverlaufen und die Schwingen ( 3 ) der Einzugswalze ( 4 ) an den Außenseiten des Laderaumes ( 1 ) angeordnet sind und beide Schwingen ( 21 und 3 ) auf ein und derselben durchgehenden Schwenkachse ( 20 ) gelagert sind.

5. Vorrichtung nach den Ansprüchen 1 bis 4,
**gekennzeichnet durch**
Anschlagpuffer ( 19 ) oberhalb der Gelenke ( 14 ) der beweglichen Kanalwand ( 11 und 12 ) am Gestell ( 15 ) im Bereich der Motorgrundplatte ( 15b ).

6. Vorrichtung nach mindestens einem der vorhergehenden Ansprüche,
**dadurch gekennzeichnet,**
daß sämtliche Aggregate von einem Hydromotor ( 27 ) aus angetrieben werden und der Drehsinn ( $U_1$ und $U_2$ ) von Vorzerkleiner ( 7, 8 ) und Hauptzerkleinerungsrotor ( 5, 6 ) entgegengesetzt zueinander verläuft.

**Claims**

1. Mobile comminuting device for organic waste-materials consisting of a charging space (1) with a mechanically driven scraper floor (2), a metering or intake roller (4) disposed thereabove and mounted to be displaceable in height by way of a rocker (3), and a comminuting unit which is in turn downstream of the roller in working direction (R) and at the end (1a) of the charging space at the discharge side, wherein this unit is constructed in per se known manner as a beater mulching apparatus with rotating working shaft (6) and rigid working beaters (5), characterised thereby that a cylindrical driven milling rotor (8) with rigid beater tools (7) as preliminary comminuting device for the material fed over the scraper floor (2) is disposed upstream of the height-displaceable intake roller (4) seen in working direction (R), and all rotating units (4, 6, 8) are screened off upwardly by a coherent, partly articulated hood (9 to 13) while forming a conveying channel ($F_1$ and $F_2$) continuing one into the other, so that the cross-section of the conveying channel can adapt itself to the inducted coarse particles.

6

2. Device according to claim 1, characterised thereby, taht the rotor (8) of the preliminary comminuting device extends over the entire width (B) of the charging space (1) and is mounted at both ends in rocker arms (21), which are each connected by way of a crank arm (22) with a steplessly regulable eccentric drive (23) to be movable upwardly and downwardly and which guide the rotor (8) along in front of the rotational path (4') of the intake roller (4).

3. Device according to claims 1 and 2, characterised thereby that the crank arms (22) and the points (24) of articulation thereof at the drive wheel (23) and rocker arms (21) are so dimensioned and positioned that the milling movement ($P_1$) directed downwardly to the scraper floor (2) runs slowly and the run-up ($P_2$) of the rotor (8) or of the rocker arms (21) runs quickly.

4. Device according to claims 1 to 3, characterised thereby that the rocker arms (21) for the preliminary comminuting rotor (8) extend along at the inner sides of the charging space (11) and the rockers (3) of the intake roller (4) are arranged at the outer sides of the charging space (1), and both rockers (21 and 3) are mounted on one and the same continuous pivot axis (20).

5. Device according to claims 1 to 4, characterised by stop buffers (19) above the joints (14) of the movable channel wall (11 and 12) at the frame (15) in the region of the motor base plate (15b).

6. Device according to at least one of the preceding claims, characterised thereby that all units are driven by a hydraulic motor (27) and the rotational sense ($U_1$ and $U_2$) of prelimiminary comminuting device (7, 8) and main comminuting rotor (5, 6) runs opposite to one another.

**Revendications**

1. Dispositif de broyage mobile pour déchets organiques, constitué d'un espace de chargement (1) à fond racleur (2) entraîné mécaniquement, d'un cylindre (4) d'alimentation ou de dosage disposé au-dessus de ce fond (2) et monté à déplacement vertical au moyen d'une bielle oscillante (3), et d'un organe de broyage disposé à la suite du cylindre (4) dans la direction de travail (R), à l'extrémité de sortie (1a) de l'espace de chargement, cet organe étant réalisé, d'une manière en soi connue, sous la forme d'un batteur à fléaux avec un arbre de travail rotatif (6) et des fléaux de travail rigide (5), **caractérisé** en ce que le cylindre d'alimentation (4) verticalement déplaçable est précédé, vu dans la direction de travail (R), d'un rotor de fraisage (8) entraîné sous forme de cylindre avec des outils de battage rigides (7), comme broyeur préalable pour le matériau alimenté par l'intermédiaire du fond racleur (2), et les différents organes rotatifs (4, 6, 8) sont protégés vers le haut par un capot continu (9 à 13) partiellement articulé, en formant un canal de transport en deux parties ($F_1$ et $F_2$) qui se confondent, de sorte que la section du canal de transport peut s'adapter aux déchets de grande taille alimentés.

2. Dispositif selon la revendication 1, **caractérisé** en ce que le rotor (8) du broyeur préalable s'étend sur toute la largeur (B) de l'espace de chargement (1) et est monté aux deux extrémités dans des bras oscillants (21) qui, par l'intermédiaire d'un bras de manivelle (22) respectif, sont reliés en mobilité ascendante et descendante à un entraînement excentrique (23) réglable en continu, et guident le rotor (8) en déplacement devant la trajectoire de révolution (4') du cylindre d'alimentation (4).

3. Dispositif selon les revendications 1 et 2, **caractérisé** en ce que des bras de manivelle (22) et leurs points d'articulation (24) à la roue motrice (23) et aux bras oscillants (21) sont dimensionnés ou encore positionnés de telle sorte que le mouvement de fraisage ($P_1$), dirigé vers le bas en direction du fond racleur (2), se déroule lentement, et que la remontée (P2) du rotor (8) ou encore des bras oscillants (21) se déroule rapidement.

4. Dispositif selon les revendications 1 à 3, **caractérisé** en ce que les bras oscillants (21) pour le rotor de broyage préalable (8) s'étendent le long des côtés intérieurs de l'espace de chargement (1) et les bielles oscillantes (3) du cylindre d'alimentation (4) sont disposées sur les côtés extérieurs de l'espace de chargement (1), et les deux éléments oscillants (21 et 3) sont disposés sur un seul et même axe de pivotement ininterrompu (20).

5. Dispositif selon les revendications 1 à 4, **caractérisé** par des tampons de butée (19) au-dessus des articulations (14) de la paroi de canal mobile (11 et 12) sur le châssis (15), dans la région de la plaque de base (15b) pour le moteur.

6. Dispositif selon l'une au moins des revendications précédentes, **caractérisé** en ce que les différents organes sont entraînés à partir d'un moteur hydraulique (27) et les sens de rotation respectifs ($U_1$ et $U_2$) du broyeur préalable (7, 8) et du rotor de broyage principal (5, 6) sont mutuellement opposés.

Fig. 1

Fig. 2

Fig. 3